# EUROPÄISCHE PATENTSCHRIFT

(11) **EP 2 983 842 B1**
(45) Veröffentlichungstag und Bekanntmachung des Hinweises auf die Patenterteilung: **17.05.2017**
(21) Anmeldenummer: 14723676.4
(22) Anmeldetag: 08.04.2014
(51) Int. Cl.: B21D 5/02, B21D 5/16, B21D 19/08, B21D 5/00

(54) **BIEGEPRESSE MIT EINER BIEGEWINKEL-MESSVORRICHTUNG**
BENDING PRESS WITH A BENDING-ANGLE MEASURING DEVICE
PRESSE PLIEUSE AVEC UN DISPOSITIF DE MESURE D'ANGLE DE PLIAGE

(30) Priorität: 09.04.2013 AT 502372013
(43) Veröffentlichungstag der Anmeldung: 17.02.2016
(73) Patentinhaber: TRUMPF Maschinen Austria GmbH & Co. KG., 4061 Pasching (AT)
(72) Erfinder: ANGERER, Gerhard, A-4203 Altenberg (AT); FREUDENTHALER, Klemens, A-4020 Linz (AT); GAGGL, Josef, A-4400 Steyr (AT); HÖRL, Matthias, A-6372 Oberndorf/Tirol (AT); THEIS, Helmut, A-4540 Pfarrkirchen (AT); WEISS, Thomas, A-4020 Linz (AT)
(74) Vertreter: Burger, Hannes
(86) Internationale Anmeldenummer: PCT/AT2014/050082
(87) Internationale Veröffentlichungsnummer: WO 2014/165885

(56) Entgegenhaltungen:
- WO-A1-2009/115311
- DE-A1- 10 327 388
- US-A- 4 772 801
- US-A1- 2006 109 484

## Beschreibung

Die Erfindung betrifft eine Biegepresse mit einer Biegewinkel-Messvorrichtung.

Bei der Durchführung von Biegeumformungen in einer Biegepresse mit einem Biegegesenk und einem Pressbalken hängt die Genauigkeit der erzielbaren Biegeumformung neben den geometrischen Abmessungen des Biegegesenks und des Stempels, insbesondere von der Eindringtiefe des Stempels in das Biegegesenk ab. Aufgrund der geometrischen Abmessungen des Biegegesenks und des Stempels, sowie der Materialeigenschaften des umzuformenden Bleches, lässt sich eine Soll-Presskraft des Stempels und damit eine Soll-Eindringtiefe des Stempels in das Biegegesenk ermitteln, um die gewünschte Biegeumformung durchführen zu können. Schwankungen der Materialeigenschaften, insbesondere der Festigkeit und/oder der Blechdicke können dazu führen, dass ursprünglich ermittelte Parameter für die Biegeumformung, insbesondere der Pressdruck, für die aktuell durchzuführende Biegeumformung nicht mehr korrekt sind, sodass der gewünschte Biegewinkel nicht erreicht oder überschritten wird. Zur Durchführung einer korrekten Biegeumformung, unabhängig von Schwankungen bei Materialtoleranzen, ist es daher von Vorteil, wenn die aktuell erreichte Biegeumformung während des Umformvorganges ermittelt werden kann. Dazu sind beispielsweise aus dem Stand der Technik kontaktierende Vorrichtungen bekannt, bei denen im Stempel angeordnete Tastfinger am sich aufbiegenden Blech anliegen und dadurch den sich einstellenden Biegewinkle ermitteln.

Aus dem Dokument EP 0 993 882 A1 ist ein Verfahren und eine Vorrichtung zur Durchführung des Verfahrens bekannt, wonach in einer Aufnahmekammer eines keilförmigen Fortsatzes eines Biegestempels in vertikaler Richtung verstellbare Tastelemente angeordnet sind, deren Tastspitzen die Biegekante des Keilfortsatzes im unbelasteten Zustand, d.h. vor dem Aufsetzen auf den umzuformenden und auf dem Biegegesenk aufliegenden Werkteil, um ein gleiches Maß überragen. Die Tastspitzen der Tastelemente sind zueinander seitlich versetzt. Dadurch tritt beim Umformvorgang zur Bildung einer winkeligen Kantung am Blechteil eine Relativverstellung zwischen den Tastelementen in vertikaler Richtung ein. Die Differenz des Verstellweges der Tastelemente, die durch ein in der Aufnahmekammer den Tastelementen zugeordnetes Kontrollmittel detektiert wird, bildet ein Messergebnis aus dem in Echtzeit der Winkel zwischen den Schenkeln ermittelbar ist und daraus Steuersignale für die Hubverstellung eines der verstellbaren Biegewerkzeuge zur Erzielung eines vorgegebenen Winkels, zwischen den Schenkeln des abgewinkelten Werkteils, generiert werden.

Aus einem weiteren Dokument, DE 40 36 289 A1, ist ein Verfahren und sind unterschiedliche Ausbildungen für Biegestempel und Biegegesenke, zur Detektion der Exaktheit eines Umformvorganges an einem Werkteil, durch den integrierten Einbau elektrischer oder pneumatischer Erfassungsmitteln in die Werkzeuge geoffenbart. Diese erfassen in Echtzeit die Werkteilform während des Umformvorganges und werden in einem Kontroller bei Abweichungen der IST- Form von einer vorgegebenen SOLL- Form Steuersignale für die Hubverstellung eines der verstellbaren Biegewerkzeuge zur Formerzielung generiert.

Aus der WO 96/41690 A1 ist ein Verfahren zum Abkanten von Werkstücken sowie eine Bearbeitungsmaschine zur Durchführung des Verfahrens bekannt. Ein Biegestempel ist mit Tastelementen versehen, mit denen eine Ist-Größe des Biegewinkels und dessen Änderung fortlaufend ermittelt wird und die ermittelte Ist-Größe des Biegewinkels mit einer Soll-Größe in einer Vergleichsvorrichtung verglichen wird und bei einer Abweichung Steuerfunktionen für einen Verstellantrieb der Bearbeitungsmaschine zur Korrektur des Biegewinkels generiert werden.

Aus der DE 30 08 701 A1 ist eine Winkelmessvorrichtung für Abkantpressen bekannt, bei der ein Biegestempel eine gehäuseartige Aufnahme aufweist in der ein relativ zum Biegestempel und in Verstellrichtung des Biegestempels verstellbares Tastelement angeordnet ist, welches in unbelasteter Stellung durch die Wirkung einer Federanordnung in einer Stellung positioniert ist bei der eine Tastfläche des Tastelements fluchtend mit einer Biegekante des Biegestempels ausgerichtet und die Tastfläche zur Biegekante exzentrisch angeordnet ist. Bei einem Umformvorgang eines Werkteils erfolgt durch Beaufschlagung durch einen Biegeschenkel ein Einfahren des Tastelements in die Aufnahme, wobei durch Messung des Eintauchweges die Ist-Größe des Biegewinkels des Werkteils während des Umformvorganges kontrolliert wird.

Aus dem weiteren Dokument DE 20 44 199 A1 ist ein Verfahren und eine Vorrichtung zum gesteuerten oder selbsttätigen Freibiegen von Blechstücken zwischen einem Biegegesenk und einem Biegestempel bei kraftgebundenen Pressen bekannt. Die Verstellung des Biegestempels ist an jeder Stelle eines Gesamtverstellweges unterbrechbar. Außerhalb des Stempels ist ein Messwerk mit zumindest einem Tastelement angeordnet, welches von zumindest einem Biegeschenkel des Werkteils beim Umformvorgang beaufschlagt wird und wobei über einen ermittelten Messwert der Verstellung des Tastelements der Ist-Biegewinkel ermittelt wird.

Weiter ist aus der EP 0 166 351 eine Vorrichtung an einer Maschine für Umformarbeiten an blechförmigen Materialien mit Rückfederungseigenschaften bekannt, bei der ein Sensor beim Biegevorgang den Betrag und die Richtung der Biegung des blechförmigen Materials und/oder beim Öffnen des Werkzeuges aus seiner Soll-Position den Betrag und die Richtung der Rückfederung des vom Werkzeug entlasteten blechförmigen Materials erfasst. In einer elektronischen Schaltung wird unter Berücksichtigung der Materialkennwerte des blechförmigen Materials und des Werkzeuges sowie der detektierten Biegung und Rückfederung ein Signal für die Soll-Position des Werkzeuges erzeugt und gespeichert und auf Stellglieder gegeben, welche das Werkzeug in die Soll-Position zur Erzielung des Soll-Winkels verstellen.

Kontaktbehaftete Winkelmessvorrichtungen haben jedoch den Nachteil, dass sie direkt mit dem umzuformenden Werkstück in Kontakt kommen und somit insbesondere die Gefahr einer Verschmutzung besteht. Auch kann es bei kontaktierenden Messsystemen durch das sich aufbiegende Blech zu einer Schädigung der Messvorrichtung kommen. Zur Vermeidung der Nachteile kontaktbehafteter Winkelmessvorrichtungen zeigt der Stand der Technik kontaktlose, zumeist optisch basierende Winkelmessvorrichtungen. Dabei wird an einem Endbereich des Biegegesenks eine Beleuchtungsvorrichtung und am gegenüberliegenden Endbereich eine Bilderfassungsvorrichtung angeordnet. Die Beleuchtungsvorrichtung gibt längs der Biegelinie einen Lichtstrahl in Richtung der Bilderfassungsvorrichtung ab, die Bilderfassungsvorrichtung weist eine Optik auf, die das stirnseitige Ende des umzuformenden Blechteils erfasst. Derartige Ausführungen sind beispielsweise aus den Schriften JP 2155514 A, JP 2280920 A, EP 1 914 019 A1, EP 2 147 729 A1, JP 3052717 A bekannt. Der Nachteil derartiger Ausführungen liegt darin, dass lediglich die Stirnseite des Bleches erfasst wird. Bei kurzen umzuformenden Blechen wird zumeist eine ausreichende Genauigkeit längs der gesamten Biegelinie erreicht, so dass hier eine stirnseitige Erfassung ausreichend sein wird. Insbesondere jedoch bei längeren Blechen und/oder Blechen mit einer höheren Festigkeit, wird der mittlere Abschnitt der Biegelinie aufgrund der unvermeidbaren und nur teilweise kompensierbaren Durchbiegung des Presstisches bzw. des Pressbalkens, einen von den Randabschnitten abweichenden Biegewinkel aufweisen.

Aus der AT 511 557 A1 ist ferner eine Vorrichtung bekannt, bei der eine Lichtquelle längs des Pressbalkens verschiebbar angeordnet ist und so lediglich einen Abschnitt des Bleches beleuchtet. Dieser beleuchtete Abschnitt wird von einem, gegenüber der Biegelinie um einen kleinen Winkel verschwenkten Bilderfassungssystem erfasst und aus der erfassten Beleuchtungsspur der Biegewinkel ermittelt. Der Nachteil dieses Systems liegt nun darin, dass längs des Biegestempels eine verfahrbare Beleuchtungsvorrichtung bzw. dass mehrere Beleuchtungsvorrichtungen vorhanden sein müssen und dass bei langen, umzuformenden Blechteilen gegebenenfalls eine Winkelanpassung der optischen Achse des Kamerasystems erforderlich ist, um längs der Biegelinie jeden Abschnitt mit einer zuverlässigen Genauigkeit erfassen zu können

US 4 772 801 A offenbart eine Biegepresse mit einer Biegewinkel-Messvorrichtung gemäß dem Oberbegriff des Anspruchs 1.

Die aus dem Stand der Technik bekannten Winkelmessvorrichtungen haben den Nachteil, dass sie im Wesentlichen nur für kurze Blechteile eine ausreichende Genauigkeit aufweisen, oder dass eine Anordnung einer Komponente der Winkelmessvorrichtung im Bereich des sich bewegenden Biegewerkzeugs erforderlich ist, was die Gefahr einer Beschädigung mit sich bringt.

Die Aufgabe der Erfindung liegt darin eine Biegepresse mit einer Winkelmessvorrichtung zu schaffen, welche kontaktlos eine genaue Ermittlung des aktuellen Biegewinkels während der Umformung und längs des Blechteils ermöglicht. Insbesondere ist es Aufgabe der Erfindung, die Winkelmessung auch bei langen Blechteilen zu ermöglichen.

Die Aufgabe der Erfindung wird durch eine Biegepresse mit einer Biegewinkel-Messvorrichtung gemäß dem Gegenstand des Anspruchs 1 gelöst.

Gemäß der Erfindung sind die Beleuchtungsvorrichtung und die Bilderfassungsvorrichtung an einem ersten Ende des Gestells angeordnet und ferner sind im Strahlengang ein Strahlteiler und ein Reflektor angeordnet. Ferner weist die Bilderfassungsvorrichtung eine telezentrische Optik und einen flächigen Bildsensor aufweist, wobei die telezentrische Optik eine Blende und zumindest eine Linsengruppe aufweist. In einer bevorzugten Anordnung wird von der Beleuchtungsvorrichtung ein Lichtbündel ausgesandt, welches vom Strahlenteiler parallel zur Biegelinie in Richtung des Reflektors gelenkt wird und dabei das zu erfassende Werkstück passiert. Der Reflektor lenkt das Lichtbündel parallel zur Biegelinie zurück in Richtung des Strahlteilers, welcher aufgrund seiner optischen Eigenschaften das vom Reflektor kommende Strahlenbündel in Richtung der Bilderfassungsvorrichtung durchlässt. Dabei passiert das Lichtbündel erneut das zu vermessende Werkstück. Zur Vereinfachung werden die Strahlengänge am Strahlteiler idealisiert beschrieben, dem Fachmann ist jedoch bekannt, dass ein Strahlteiler die beschriebene Strahllenkung nur bis zu einem gewissen Grad erfüllen kann, es wird zu unvermeidlichen Verlusten kommen. Die Erfindung hat nun den Vorteil, dass die wesentlichen, nicht-mechanischen Komponenten der Messvorrichtung an einer Seite der Biegepresse konzentriert sind. Gegenüberliegend ist lediglich ein Reflektor angeordnet, der das eintreffende Lichtbündel reflektiert. Da im Bereich von Werkzeugmaschinen stets mit mechanischen Erschütterungen, Schmutz und Beeinträchtigungen durch sich bewegende bzw. deformierende Teile gegeben ist, hat diese Ausführung den weiteren Vorteil, dass die empfindlichen Komponenten bspw. in einem besonders geschützten Bereich an der ersten Seite angebracht werden können. Der im Vergleich zur Beleuchtungs- bzw. Bilderfassungsvorrichtung zumeist deutlich kostengünstigere Reflektor kann somit wesentlich freier positioniert werden, da bspw. im Fall einer Beschädigung, zumeist nur ein geringer Schaden entsteht, auch ist eine Wiederherstellung zumeist wesentlich einfacher möglich. Gemäß der Erfindung ist die Optik als objektseitig telezentrische Optik ausgebildet. Ein objektseitig telezentrischer Strahlengang wird verwendet, um Objekte ohne perspektivische Verzerrung zu erfassen, das Bild erscheint also unabhängig vom Objektabstand immer gleich groß. Ein objektseitig telezentrischer Strahlengang lässt sich am einfachsten durch eine einzelne Sammellinse mit einer Aperturblende in der bildseitigen Brennebene realisieren. Gemäß einer Weiterbildung weist die telezentrische Optik eine Verfahrvorrichtung auf, welche dazu ausgebildet ist, die Blende und/oder die Linse der Linsengruppe in Richtung der optischen Achse der telezentrischen Optik zu verschieben. Diese Ausbildung ist insbesondere im Hinblick auf eine automatisierte und rasche Durchführung der Ermittlung des Biegewinkels von Vorteil. Da während der Biegeumformung an mehrere Positionen längs der Biegelinie der Biegewinkel gemessen werden soll, ist es von Vorteil, wenn alle Vorgänge zur Durchführung der Messung fernwirkbar ausgeführt werden können. Somit kann erreicht werden, dass die Bestimmung des Biegewinkels die Biegeumformung zeitlich nicht oder nur unwesentlich einschränkt.

Gemäß einer Weiterbildung ist zumindest eine Linse der Linsengruppe als Flüssiglinse ausgebildet. Eine Flüssiglinse ist eine aus verschiedenen Flüssigkeiten bestehende optische Linse, mit elektrisch variabler Brennweite. Von Vorteil ist insbesondere, dass eine derartige schnell, energiesparend und erschütterungsstabil ist und somit besonders für einen Einsatz in rauen Umgebungsbedingungen geeignet ist. Gerade bei Biegepressen sind Erschütterungen beinahe unvermeidlich, welche konventionelle Glaslinsen beschädigen könnten. Auch ist es von Vorteil, wenn eine Änderung der Brennweite ohne mechanische Komponenten möglich ist, da somit die Gefahr einer Dejustage vermieden ist.

Eine Weiterbildung besteht auch darin, dass die Blende eine Blendenöffnung aufweist, welche Blendenöffnung in ihrer Öffnungsweite einstellbar ausgebildet ist, insbesondere durch ein Antriebsmittel. Bevorzugt soll die Ermittlung des Biegewinkels längs der Biegelinie automatisch erfolgen, ohne den Biegevorgang zu beeinflussen. Daher ist es von Vorteil, wenn alle zur Erfassung eines Abbilds längs der Biegelinie erforderlichen Vorgänge fernwirkbar ausgebildet sind. Somit können in schneller Folge eine Vielzahl von Messungen längs der Biegelinie durchgeführt werden, ohne den Biegevorgang zeitlich zu sehr zu behindern.

Eine Weiterbildung besteht auch darin, dass die Lichtquelle durch eine Leuchtdiode gebildet ist. Im Hinblick auf die bei einer Biegepresse auftretenden Erschütterungen ist diese Ausführung von Vorteil, da Leuchtdioden erschütterungsunempfindlich sind und somit eine lange Lebensdauer gewährleistet ist. Ferner kommt die Strahlungscharakteristik einer Punktlichtquelle sehr nahe, was den Aufwand für eine Strahlformungsoptik zur Bildung eines kollimierten Strahls reduziert und somit einen hohen optischen Wirkungsgrad der Lichtquelle sicherstellt.

Nach einer Weiterbildung ist vorgesehen, dass die Beleuchtungsvorrichtung und/oder die Bilderfassungsvorrichtung mittels einer Verstellvorrichtung am Pressbalken angeordnet sind, welche Verstellvorrichtung zur Bewegung in Verfahrrichtung ausgebildet ist. Mittels dieser Weiterbildung kann die Beleuchtungs- und/oder die Bilderfassungsvorrichtung relativ zum Stempel verschoben werden. Es ist sowohl eine gleichartige, als auch eine ungleiche Verschiebung der Beleuchtungs- und Bilderfassungsvorrichtung möglich. Somit kann bspw. der Blickwinkel der Bilderfassungsvorrichtung auf einen Abschnitt der Biegelinie geändert werden, falls bspw. durch eine bereits bestehende Umformung, der Blick bei Anordnung längs der Biegelinie, beeinträchtigt wäre.

Eine Weiterbildung besteht auch darin, dass die Beleuchtungsvorrichtung zur Abgabe von gepulstem Licht ausgebildet ist. Eine Biegepresse wird zumeist in einer Produktionshalle angeordnet sein, wo vielfältige Lichtquellen vorhanden sein können, die in den Erfassungsbereich der Bilderfassungsvorrichtung gelangen und somit die Bilderfassung beeinträchtigen könnten. Durch Kenntnis der abgegebenen Pulsfolge kann die Bildauswertevorrichtung das erfasste Bild mit der Pulsfolge korrelieren, um so die nicht von der Lichtquelle stammenden Lichteinstreuungen ausfiltern zu können.

Ferner ist eine Weiterbildung möglich, nach der die Beleuchtungsvorrichtung und/oder die Bilderfassungsvorrichtung einen Polarisationsfilter aufweisen, welcher in der jeweiligen optischen Achse angeordnet ist. Diese Weiterbildung dient ebenfalls der Erhöhung der Zuverlässigkeit der Erfassung des Biegewinkels, indem störende Lichteinflüsse ausgeblendet werden. Insbesondere können mit einem Polarisationsfilter überwiegend alle Lichteinflüsse ausgeblendet werden die nicht aus der bevorzugten Richtung und damit von der Lichtquelle kommen.

Eine Weiterbildung besteht auch darin, dass die datentechnische Bildauswertevorrichtung ein Bildanalysemodul aufweist, welches zur Analyse des vom Bildsensor erfassten Abbilds und zur Ermittlung eines Winkels ausgebildet ist.

Gemäß einer Weiterbildung ist ferner vorgesehen, dass die datentechnische Bildauswertevorrichtung zur Steuerung der Bewegung des Pressbalkens in Verfahrrichtung, in Abhängigkeit vom ermittelten Winkel ausgebildet ist. Durch Auswertung des erfassten, aktuellen Biegewinkels, kann die Bewegung des Pressbalkens so angepasst werden, dass jedenfalls der gewünschte Biegewinkel erreicht wird.

Nach einer Weiterbildung ist vorgesehen, dass der Strahlteiler als optisches Prisma oder als teildurchlässiger Spiegel ausgebildet ist. Derartige Ausführungsformen sind hinsichtlich ihrer Lenkungs- bzw. Durchlassdämpfungen gut festlegbar, so dass eine gegenseitige Beeinflussung von gelenktem und reflektiertem Lichtbündel weitestgehend vermieden wird.

Mit einer Weiterbildung, nach der der Strahlteiler einen Polarisationsfilter aufweist, kann erreicht werden, dass direktes Licht der Lichtquelle nicht in die Bilderfassungsvorrichtung gelangt. Da sich im Strahlengang das zu erfassende Werkstück befindet, wird das Licht an der Oberfläche des Werkstücks gestreut. Der Polarisationsfilter kann bspw. derart ausgebildet sein, dass dem in Richtung des Reflektors gelenkte Lichtbündel eine Polarisationsrichtung vorgegeben wird, im Strahlengang zur Bilderfassungsvorrichtung befindet sich ein Polarisationsfilter mit einer abweichenden Polarisationsrichtung. Somit kann direktes Licht der Lichtquelle ausgeblendet bzw. stark abgeschwächt werden, um so das auszuwertende Licht im Bereich des Werkstücks deutlicher hervortreten zu lassen. Dies ist insbesondere von Vorteil für einen Kantenfindungsalgorithmus, da somit im erfassten Abbild ein deutlicher Kontrast gegeben ist.

Nach einer Weiterbildung ist der Reflektor an einem, dem ersten Ende des Gestells gegenüberliegenden zweiten Ende angeordnet. Gegenebenfalls kann der Reflektor auch längs der Biegelinie verschiebbar angeordnet sein, so dass die Länge des Strahlengangs so kurz als möglich gehalten werden kann.

Eine Weiterbildung besteht ferner darin, dass der Reflektor im oder am Biegegesenk angeordnet ist. Da eine Biegung des Werkstücks nur dort erfolgen kann, wo der Beigestempel das Werkstück in das Biegegesenk drückt, ist diese Ausführung von Vorteil, da somit die länge des Strahlengangs kurz gehalten werden kann. Die ist insbesondere von Vorteil, da eine hohe Strahlintensität an der Bilderfassungsvorrichtung erreicht werden kann. Ferner ist bei einem kurzen Strahlengang die Gefahr einer unbeabsichtigten Abschattung verringert.

Zum besseren Verständnis der Erfindung wird diese anhand der nachfolgenden Figuren näher erläutert.

Es zeigen jeweils in stark schematisch vereinfachter Darstellung:
- Fig. 1: eine nicht erfindungsgemäße Presse mit einer Winkelmessvorrichtung;
- Fig. 2: eine Darstellung des Erfassungsprinzips einer Biegewinkel-Messvorrichtung für die Presse gemäß Fig. 1 ;
- Fig. 3: Eine mögliche Ausführungsform der Winkelmessvorrichtung für die Presse gemäß der Erfindung.

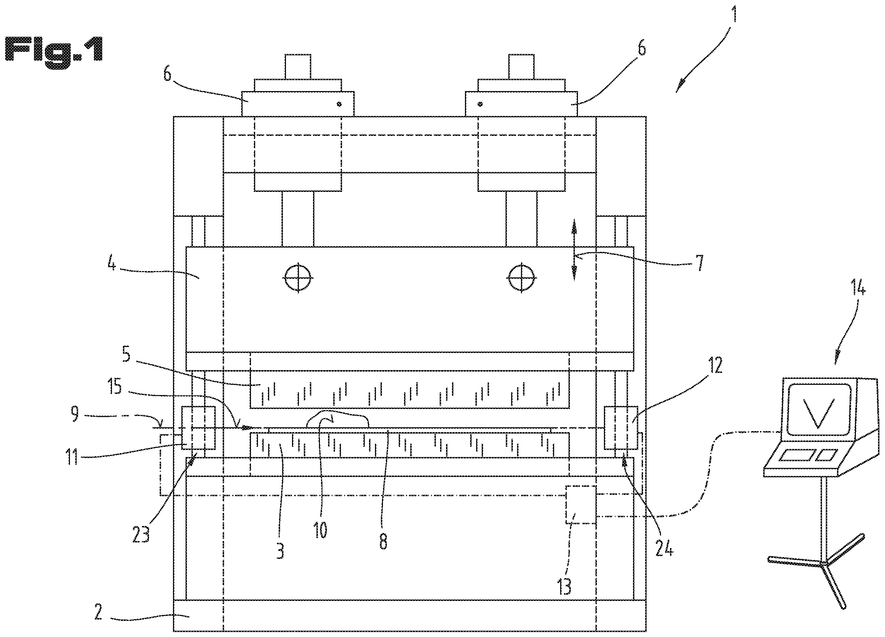

Fig. 1 zeigt eine schematische Darstellung einer Biegepresse 1 mit einer Biegewinkel-Messvorrichtung. Die Biegepresse 1 weist einen Presstisch 2 mit einem Biegegesenk 3 und einen relativ dazu beweglichen Pressbalken 4 mit einem Stempel 5 auf.

Der Pressbalken 4 wird durch Antriebsmittel 6 in einer Verfahrrichtung 7 auf das Biegegesenk 3 zubewegt, wobei der Stempel 5, insbesondere die Arbeitskante des Stempels 5, ein umzuformendes Blechteil 8 entlang einer Biegelinie 9 kontaktiert. Die Biegelinie 9 und die Verfahrrichtung 7 spannen dabei eine schematisch angedeutete Arbeitsebene 10 auf. Zumeist handelt es sich dabei um eine in vertikaler Richtung sowie durch die Biegelinie 9 verlaufende Ebene. Die gegenständliche Winkelmessvorrichtung weist eine Beleuchtungsvorrichtung 11 und eine Bilderfassungsvorrichtung 12 auf. Die Bilderfassungsvorrichtung 12 und gegebenenfalls auch die Beleuchtungsvorrichtung 11, sind mit einer datentechnischen Bildauswertevorrichtung 13 verbunden, die Bildauswertevorrichtung 13 ist ferner bevorzugt mit einer Benutzerschnittstelle 14 verbunden, auf welcher der Bedienperson der Biegepresse 1, der von der gegenständlichen Biegewinkel-Messvorrichtung ermittelten Biegewinkels dargestellt wird.

Von der Beleuchtungsvorrichtung 11 wird ein kollimiertes Lichtbündel 15 längs der Biegelinie 9 in Richtung der Bilderfassungsvorrichtung 12 abgegeben. Damit weist das kollimierte Lichtbündel 15 eine parallele Ausrichtung bezüglich der Biegelinie 9 auf und ist vereinfacht mit einem Pfeil im Bereich der Biegelinie 9 dargestellt. Die Bilderfassungsvorrichtung 12 weist eine telezentrische Optik auf, wodurch sich der Fokuspunkt der Optik, längs der Biegelinie 9 und damit längs des umzuformenden Blechteils 8 verschieben lässt, ohne die Position bzw. Anordnung der Bilderfassungsvorrichtung 12 bzw. der Beleuchtungsvorrichtung 11 ändern zu müssen. Dies bedeutet, dass der vorgegebene Abstand in Richtung der Biegelinie 9 zwischen der Beleuchtungsvorrichtung 11 und der Bilderfassungsvorrichtung 12 unverändert beibehalten werden kann. Dies auch während des oder der gesamten Messvorgänge sowohl während des Biegevorganges als auch nach erfolgtem Biegevorgang und der entlastenden Rückfederung der Biegeschenkel des umgeformten Blechteils 8.

Gegebenenfalls kann die Beleuchtungsvorrichtung 11 und die Bilderfassungsvorrichtung 12 parallel zur Arbeitsebene 10 und relativ zur Biegelinie 9 verfahren werden, wobei sowohl ein gleicher, als auch ein unterschiedlicher Verstellweg der beiden Vorrichtungen möglich ist.

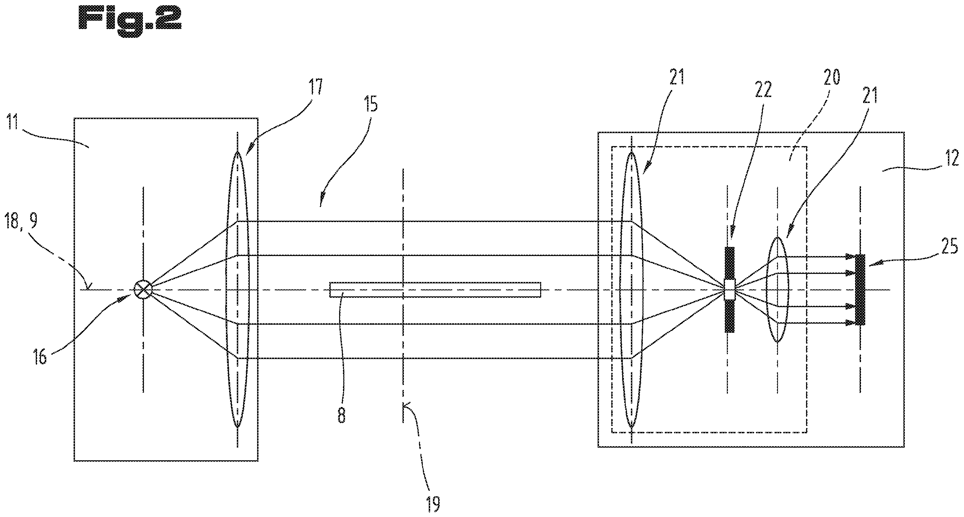

Fig. 2 zeigt eine Detaildarstellung der Biegewinkel-Messvorrichtung, insbesondere sind die Strahlengänge dargestellt.

Die Beleuchtungsvorrichtung 11 weist eine Lichtquelle 16 und einen Kollimator 17 auf. Zur Vereinfachung ist der Kollimator 17 als Einzellinse dargestellt, es ist jedoch möglich, dass der Kollimator 17 durch ein Linsensystem aus mehreren zusammenwirkenden Linsen gebildet wird. Die Lichtquelle 16 ist bevorzugt als Leuchtdiode ausgebildet. Eine Leuchtdiode kann im Wesentlichen als Punktlichtquelle gesehen werden, was für die Bildung eines parallelen Strahlenbündels, insbesondere des kollimierten Lichtbündels 15, von Vorteil ist. Die Beleuchtungsvorrichtung 11 gibt über eine nicht dargestellte Austrittsöffnung ein kollimiertes Strahlenbündel 15 in Richtung der Bilderfassungsvorrichtung 12 ab, wobei das kollimierte Strahlenbündel 15 parallel zur Biegelinie 9 ausgerichtet ist. Bevorzugt ist ferner eine optische Achse 18 der Beleuchtungsvorrichtung 11 und der Bilderfassungsvorrichtung 11 parallel zur Biegelinie 9 bzw. stimmt mit dieser überein. Im Bereich des kollimierten Lichtbündels 15 ist das umzuformende Blechteil 8 angeordnet, wobei zur Vereinfachung der Darstellung, die Komponenten der Biegepresse in dieser Figur nicht dargestellt sind.

Aus dem Stand der Technik ist bekannt, die der Bilderfassungsvorrichtung zugewandte Stirnseite des Blechteiles 8 zu erfassen und darüber auf den Biegewinkel längs des gesamten Blechteils 8 rückzuschließen. Auch ist es bekannt, einen Mittelwert des Biegewinkels über die gesamte Länge des Blechteils 8 zu erfassen. Mit dieser Biegewinkel-Messvorrichtung ist es jedoch möglich, kontaktlos an einer beliebigen Messposition 19 den Biegewinkel zu bestimmen. Dies wird in vorteilhafter Weise dadurch erreicht, dass die Bilderfassungsvorrichtung 12 eine telezentrische Optik 20 aufweist, wobei die telezentrische Optik 20 zumindest eine Linsengruppe 21 und eine Blende 22 aufweist. Auch hier werden zur Vereinfachung der Darstellung Einzellinsen gewählt, es können jedoch auch Linsengruppen vorhanden sein. Aufgrund der spezifischen, optischen Eigenschaften einer telezentrischen Optik ist es in vorteilhafterweise möglich, den Fokuspunkt weitestgehend beliebig entlang der optischen Achse 18 zu verschieben. Dadurch kommt es zu keinen Verzerrungen, welche das erfasste Bild gegebenenfalls unbrauchbar machen würden bzw. sehr aufwändige Bildkorrekturen erforderlich machen würden. Diese Variabilität wird dadurch erreicht, dass die Elemente der Linsengruppe 21 längs der optischen Achse 18 verschiebbar ausgebildet sind. Eine weitere Variationsmöglichkeit besteht darin, dass die Brennweite einer Linse der Linsengruppe 21 variabel ausgebildet ist. Aufgrund des Einsatzbereiches in bzw. an einer Biegepresse, wo mit starken Erschütterungen zu rechnen ist, wird die Linse variabler Brennweite bevorzugt als Flüssigkeitslinse ausgebildet, sodass eine Variation der Brennweite durch eine Variation einer angelegten, elektrischen Spannung möglich ist. Somit sind keine mechanischen Bauteile erforderlich, was für die Zuverlässigkeit der Biegewinkelmessvorrichtung von besonderem Vorteil ist.

Im Strahlengang der telezentrischen Optik 20 nachgelagert ist ein Bildsensor 25 angeordnet, welcher bevorzugt als CCD-Flächensensor ausgebildet ist und in rascher Folge ein Abbild des umzuformenden Blechteils 8 an der gewünschten Erfassungsposition aufnehmen kann. Die weitere Verarbeitung des erfassten Bildes wird von der Auswertevorrichtung, insbesondere der Bildauswertevorrichtung 13, durchgeführt, welche insbesondere eine Kantenfindung bzw. Kantenschärfung durchführt, um somit aus dem erfassten Abbild die Schenkel des sich umformenden Blechteils 8 ermittelt und daraus den aktuellen Biegewinkel bestimmt.

Die Beleuchtungsvorrichtung 11 kann kontinuierlich ein kollimiertes Lichtbündel 15 abgeben, gemäß einer Weiterbildung ist es jedoch möglich, dass von der Beleuchtungsvorrichtung 11 gepulstes Licht abgegeben wird. Im Umfeld einer Biegepresse 1 können beispielsweise Elektroschweißvorgänge stattfinden, welche aufgrund des dort auftretenden Lichtbogens ein starkes Streulicht produzieren, welches gegebenenfalls in den Erfassungsbereich der Bilderfassungsvorrichtung 12 gelangt. Durch Pulsen der Beleuchtungsvorrichtung 11 und Korrelation des Pulssignals mit dem erfassten Abbild, können nun jene Lichteffekte bzw. Störungseinflüsse eliminiert werden, welche nicht durch die Beleuchtungsvorrichtung 11 hervorgerufen werden. Im einfachsten Fall kann beispielsweise das erfasste Abbild bei deaktivierter Beleuchtungsvorrichtung 11 vom erfassten Abbild bei aktivierter Beleuchtungsvorrichtung 11 subtrahiert werden. Bei einer entsprechend kurzen Pulsdauer können somit zuverlässig Störungseinflüsse eliminiert werden.

Der besondere Vorteil dieser Ausführung liegt nun darin, dass aufgrund einer telezentrischen Optik, in Kombination mit einer bevorzugt nicht mechanisch steuerbaren Änderung der optischen Parameter der telezentrischen Optik 20, eine sehr rasche Erfassung des Biegewinkels während der Durchführung des Biegevorgangs möglich ist. Insbesondere ist eine kontaktlose Messung während des gesamten Biegevorgangs möglich, ohne den Biegevorgang zu beeinträchtigen. Aufgrund der stetigen Überwachung des sich einstellenden Biegewinkels kann die Maßgenauigkeit erhöht werden, ohne den Durchsatz wesentlich einzuschränken.

Wie nun besser aus der Fig. 1 zu ersehen ist, umfasst die Biegepresse 1 auch noch ein nicht näher bezeichnetes Gestell bzw. einen Grundrahmen, welcher zur Halterung bzw. Lagerung der zuvor beschriebenen unterschiedlichen Bauteile bzw. Bauteilgruppen dient. So kann es sich dabei z.B. um den Presstisch 2 mit dem Biegegesenk 3, den verfahrbar gelagerten Pressbalken 4 mit dem Stempel 5, die Antriebsmittel 6 sowie die Beleuchtungsvorrichtung 11, die Bilderfassungsvorrichtung 12 und die Bildauswertevorrichtung 13 handeln. Weiters ist noch vereinfacht angedeutet, dass z.B. die Beleuchtungsvorrichtung 11 an einem ersten Ende 23 des Gestells und die Bilderfassungsvorrichtung 12 an einem davon distanzierten zweiten Ende 24 angeordnet ist. So befindet sich das erste Ende 23 hier an der linken Seite und das zweite Ende 24 an der rechten Seite des Gestells und sind somit in Richtung des Pressbalkens 4 und damit auch in Richtung der Biegelinie 9 voneinander distanziert angeordnet. Damit kann auch von einem linksseitigen Ende 23 sowie rechtsseitigen Ende 24 im Bereich des Gestells gesprochen werden. Es könnten aber auch die Seiten zwischen der Beleuchtungsvorrichtung 11 und der Bilderfassungsvorrichtung 12 vertauscht werden.

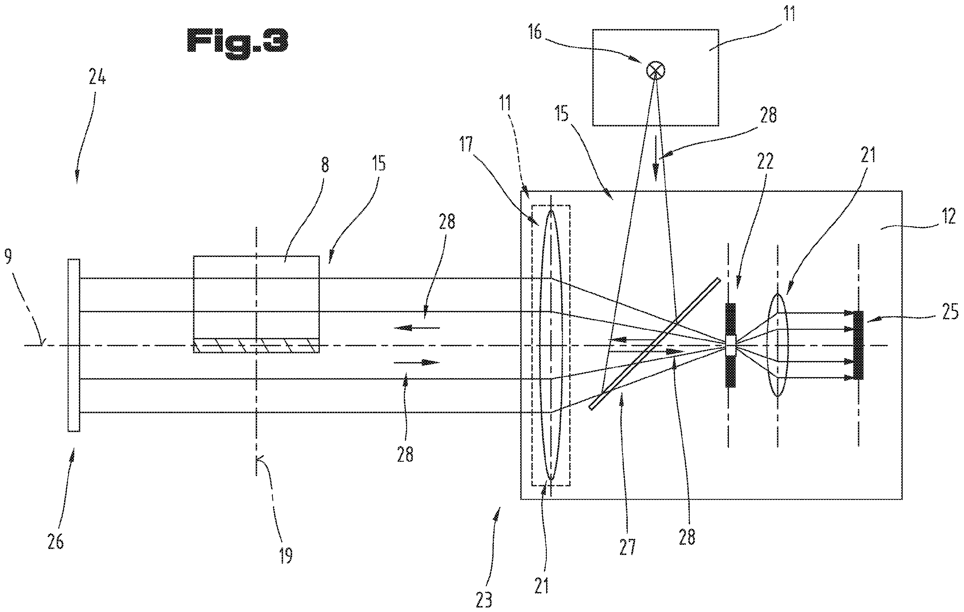

Figur 3 zeigt eine mögliche Ausführungsform der Winkelmessvorrichtung der erfindungsgemäßen Presse. Dabei sind die Beleuchtungsvorrichtung 11 und die Bilderfassungsvorrichtung 12 am ersten Ende 23 des Maschinengestells angeordnet, am gegenüberliegenden zweiten Ende 24 des Maschinengestells ist ein Reflektor 26 angeordnet. Ferner ist im Strahlengang 28 ein Strahlteiler 27 angeordnet. Die Lichtquelle 16 der Beleuchtungsvorrichtung sendet ein Lichtbündel aus, welches vom Strahlteiler 27 in Richtung des Kollimators 17 umgelenkt wird, welcher aus dem divergenten Lichtbündel, ein paralleles Lichtbündel formt. Dieses parallele Lichtbündel breitet sich parallel zur Biegelinie 9 in Richtung des Reflektors 26 aus und passiert dabei das Werkstück 8, dessen Biegewinkel zu erfassen ist. Vom Reflektor 26 wird das Strahlenbündel zurück in Richtung des Strahlteilers 27 reflektiert und passiert dabei erneut das Werkstück 8. Aufgrund der optischen Eigenschaften des Strahlteilers 27 wird das aus Richtung des Reflektors kommende Lichtbündel in Richtung des Bildsensors 25 durchgelassen.

Bei der dargestellten Ausführungsvariante befindet sich, im Gegensatz zum Beispiel nach Figur 2, der Kollimator der Beleuchtungsvorrichtung sowohl in dem von der Lichtquelle ausgehenden Strahlengang 28, als auch in dem, auf den Bildsensor zugerichteten Strahlengang 28 und ist somit Teil der Linsengruppe 21 der Telezentrischen Optik. Dem in der Optik kundigen Fachmann ist bekannt, wie die Brennweite des Kollimators und die Abstände zu wählen sind, damit diese Doppelfunktionalität erfüllt werden kann.

Die Winkelmessvorrichtung der erfindungsgemäßen Presse hat den Vorteil, dass empfindliche optische Komponenten lediglich an einer Seite 23 der Biegepresse angeordnet sein müssen. Somit können sowohl die Beleuchtungs- 11 als auch die Bilderfassungsvorrichtung 12 bspw. in einem gemeinsamen Gehäuse angeordnet sein, welches Gehäuse gegenüber den herrschenden Umgebungseinflüssen besonders gut geschützt ausgeführt sein kann. Insbesondere ist es möglich, diese Komponenten in einem Endabschnitt des Pressentisches anzubringen, in welchem Abschnitt die Gefahr einer Beschädigung durch das sich aufbiegende Werkstück nicht gegeben ist. Auch kann durch eine wahlfreie Positionierung des Reflektors 26, insbesondere möglichst nahe am zu biegenden Werkstück, erreicht werden, das ein möglichst kurzer Strahlengang 28 erreicht wird.

Der Ordnung halber sei abschließend darauf hingewiesen, dass zum besseren Verständnis des Aufbaus der Biegewinkel-Messvorrichtung diese bzw. deren Bestandteile teilweise unmaßstäblich und/oder vergrößert und/oder verkleinert dargestellt wurden.

### Bezugszeichenaufstellung

- 1: Biegepresse
- 2: Presstisch
- 3: Biegegesenk
- 4: Pressbalken
- 5: Stempel

- 6: Antriebsmittel
- 7: Verfahrrichtung
- 8: Blechteil
- 9: Biegelinie
- 10: Arbeitsebene

- 11: Beleuchtungsvorrichtung
- 12: Bilderfassungsvorrichtung
- 13: Bildauswertevorrichtung
- 14: Benutzerschnittstelle
- 15: kollimiertes Lichtbündel

- 16: Lichtquelle
- 17: Kollimator
- 18: optische Achse
- 19: Position
- 20: Telezentrische Optik

- 21: Linsengruppe
- 22: Blende
- 23: erstes Ende
- 24: zweites Ende
- 25: Bildsensor

- 26: Reflektor
- 27: Strahlteiler
- 28: Strahlengang

## Patentansprüche

1. Biegepresse (1) mit einer Biegewinkel-Messvorrichtung,
wobei die Biegepresse (1) einen Presstisch (2) mit einem Biegegesenk (3) und einen, in einer Verfahrrichtung (7) relativ dazu beweglichen Pressbalken (4) mit einem Stempel (5) aufweist, und wobei der Pressbalken (4) und das Biegegesenk (3) in einem Gestell angeordnet sind und wobei im Biegegesenk (3) ein umzuformendes Blechteil (8) angeordnet ist, welches der Stempel (5) bei der Biegeumformung entlang einer Biegelinie (9) kontaktiert,
umfassend eine Beleuchtungsvorrichtung (11) und eine optische Bilderfassungsvorrichtung (12) und eine mit der Bilderfassungsvorrichtung (12) verbundene datentechnische Bildauswertevorrichtung (13),
wobei die Beleuchtungsvorrichtung (11) eine Lichtquelle (16) und einen Kollimator (17) aufweist und ein Lichtbündel (15) längs eines Strahlengangs in Richtung der der Bilderfassungsvorrichtung (12) abgibt,
**dadurch gekennzeichnet, dass**
die Beleuchtungsvorrichtung (11) und die Bilderfassungsvorrichtung (12) an einem ersten Ende (23) des Gestells angeordnet sind
und ferner im Strahlengang (28) ein Strahlteiler (27) und ein Reflektor (26) angeordnet sind, und dass ferner die Bilderfassungsvorrichtung (12) eine objektseitig telezentrische Optik (20) und einen flächigen Bildsensor (25) aufweist,
wobei die telezentrische Optik (20) eine Blende (22) und zumindest eine Linsengruppe (21) aufweist.

2. Biegepresse nach Anspruch 1, **dadurch gekennzeichnet, dass** die telezentrische Optik (20) eine Verfahrvorrichtung aufweist, welche dazu ausgebildet ist, die Blende (22) der Linsengruppe (21) in Richtung der optischen Achse (18) der telezentrischen Optik (20) zu verschieben.

3. Biegepresse nach einem der Ansprüche 1 oder 2, **dadurch gekennzeichnet, dass** zumindest eine Linse der Linsengruppe (21) als Flüssiglinse ausgebildet ist.

4. Biegepresse nach einem der Ansprüche 1 bis 3, **dadurch gekennzeichnet, dass** die Lichtquelle (16) durch eine Leuchtdiode gebildet ist.

5. Biegepresse nach einem der Ansprüche 1 bis 4, **dadurch gekennzeichnet, dass** die Beleuchtungsvorrichtung (11) und/oder die Bilderfassungsvorrichtung (12) mittels einer Verstellvorrichtung am Pressbalken (4) angeordnet sind, welche Verstellvorrichtung zur Bewegung in Verfahrrichtung (7) ausgebildet ist.

6. Biegepresse nach einem der Ansprüche 1 bis 5, **dadurch gekennzeichnet, dass** die Beleuchtungsvorrichtung (11) zur Abgabe von gepulstem Licht ausgebildet ist.

7. Biegepresse nach einem der Ansprüche 1 bis 6, **dadurch gekennzeichnet, dass** die Beleuchtungsvorrichtung (11) und/oder die Bilderfassungsvorrichtung (12) einen Polarisationsfilter aufweisen, welcher in der jeweiligen optischen Achse (18) angeordnet ist.

8. Biegepresse nach einem der Ansprüche 1 bis 7, **dadurch gekennzeichnet, dass** die datentechnische Bildauswertevorrichtung (13) ein Bildanalysemodul aufweist, welches zur Analyse des vom Bildsensor (25) erfassten Abbilds und zur Ermittlung eines Winkels ausgebildet ist.

9. Biegepresse nach Anspruch 8, **dadurch gekennzeichnet, dass** die datentechnische Bildauswertevorrichtung (13) zur Steuerung der Bewegung des Pressbalkens (4) in Verfahrrichtung (7), in Abhängigkeit vom ermittelten Winkel ausgebildet ist.

10. Biegepresse nach einem der Ansprüche 1 bis 9, **dadurch gekennzeichnet, dass** der Strahlteiler (27) als optisches Prisma oder als teildurchlässiger Spiegel ausgebildet ist.

11. Biegepresse nach einem der Ansprüche 1 bis 10, **dadurch gekennzeichnet, dass** der Strahlteiler (27) einen Polarisationsfilter aufweist.

12. Biegepresse nach einem der Ansprüche 1 bis 11, **dadurch gekennzeichnet, dass** der Reflektor (26) an einem, dem ersten Ende (23) des Gestells gegenüberliegenden zweiten Ende (24) angeordnet ist.

13. Biegepresse nach einem der Ansprüche 1 bis 12, **dadurch gekennzeichnet, dass** der Reflektor (26) im oder am Biegegesenk (3) angeordnet ist.

## Claims

1. A bending press (1) with a bending angle measuring device, wherein the bending press (1) comprises a pressing table (2) with a bending die (3) and, movable relative thereto in one displacement direction (7), a pressing beam (4) with a punch (5), and wherein the pressing beam (4) and the bending die (3) are arranged in a frame and wherein in the bending die (3) a metal part (8) to be reshaped is arranged and contacts the punch (5) along the bending line (9) during bending reshaping,
comprising a lighting device (11) and an optical image recording device (12) and a data image evaluation device (13) connected to the image recording device (12),
wherein the lighting device (11) comprises a light source (16) and a collimator (17) and emits a light bundle (15) along a beam path in the direction of the image recording device (12)
**characterised in that**
the lighting device (11) and the image recording device (12) are arranged at a first end (23) of the frame
and, additionally, a beam splitter (27) and a reflector (26) are arranged in the beam path (28) and **in that** the image recording device (12) also has an object-side telecentric lens (20) and a flat image sensor (25),
wherein the telecentric lens (20) comprises an aperture (22) and at least one lens group (21).

2. The bending press according to claim 1 **characterised in that** the telecentric lens (20) has a displacement device which is designed to displace the aperture (22) of the lens group (21) in the direction of the optical axis (18) of the telecentric lens (20).

3. The bending press according to any one of claims 1 or 2 **characterised in that** at least one lens of the lens group (21) is designed as a liquid lens.

4. The bending press according to any one of claims 1 to 3 **characterised in that** the light source (16) is formed by a light diode.

5. The bending press according to any one of claims 1 to 4 **characterised in that** the lighting device (11) and/or the image recording device (12) is arranged by means of an adjusting device on the pressing beam (4), said adjusting device being designed to move in the displacement direction (7).

6. The bending press according to any one of claims 1 to 5 **characterised in that** the lighting device (11) is designed to emit pulsed light.

7. The bending press according to any one of claims 1 to 6 **characterised in that** the lighting device (11) and/or the image recording device (12) comprise(s) a polarisation filter which is arranged in the respective optical axis (18).

8. The bending press according to any one of claims 1 to 7 **characterised in that** the data image evaluation device (13) comprises an image analysis module which is designed for analysing the image recording by the image sensor (25) and determining an angle.

9. The bending press according to claim 8 **characterised in that** the data image evaluation device (13) is designed to control the movement of the pressing beam (4) in the displacement direction (7) as a function of the determined angle.

10. The bending press according to any one of claims 1 to 9 **characterised in that** the beam splitter (27) is designed as an optical prism or as a partially permeable mirror.

11. The bending press according to any one of claims 1 to 10 **characterised in that** the beam splitter (27) comprises a polarisation filter.

12. The bending press according to any one of claims 1 to 11 **characterised in that** the reflector (26) is arranged at a second end (24) opposite the first end (23) of the frame.

13. The bending press according to any one of claims 1 to 12 **characterised in that** the reflector (26) is arranged in or on the bending die (3).

## Revendications

1. Presse plieuse (1) munie d'un dispositif de mesure d'angle de pliage, ladite presse plieuse (1) comportant une table de pressage (2) avec une matrice de pliage (3) et une barre de pressage (4) avec un poinçon (5) mobile de manière relative dans une direction de déplacement (7) par rapport à celle-ci, et dans lequel la barre de pressage (4) et la matrice de pliage (3) sont disposées dans un châssis, et dans lequel une pièce en tôle (8) à usiner est disposée dans matrice de pliage (3), qui vient en contact avec le poinçon (5) lors de la déformation par pliage le long d'une ligne de pliage (9),
comprenant un dispositif d'éclairage (11) et un dispositif de capture d'image optique (12), et un dispositif d'évaluation d'image informatique (13) connecté au dispositif de capture d'image (12),
dans lequel le dispositif d'éclairage (11) comprend une source de lumière (16) et un collimateur (17), et délivre en sortie un faisceau de lumière (15) le long d'un trajet de faisceau dans la direction du dispositif de capture d'image (12),
**caractérisé en ce que**
le dispositif d'éclairage (11) et le dispositif de capture d'image (12) sont agencés à une première extrémité (23) du châssis,
et **en ce que** sont agencés en outre dans le trajet de faisceau (28) un séparateur de faisceau (27) et un réflecteur (26),
et **en ce que** le dispositif de capture d'image (12) présente une optique télécentrique (20) côté objectif et un capteur d'image plan (25),
dans lequel l'optique télécentrique (20) comprend un diaphragme (22) et au moins un groupe de lentilles (21).

2. Presse plieuse selon la revendications 1, **caractérisée en ce que** l'optique télécentrique (20) comprend un dispositif de déplacement, qui est conçu pour déplacer le diaphragme (22) du groupe de lentilles (21) dans la direction de l'axe optique (18) de l'optique télécentrique (20).

3. Presse plieuse selon la revendications 1 ou 2, **caractérisée en ce qu'**au moins une lentille du groupe de lentilles (21) est réalisée sous la forme d'une lentille liquide.

4. Presse plieuse selon l'une quelconque des revendications 1 à 3, **caractérisée en ce que** la source de lumière (16) est formée par une diode électroluminescente.

5. Presse plieuse selon l'une quelconque des revendications 1 à 4, **caractérisée en ce que** le dispositif d'éclairage (11) et/ou le dispositif de capture d'image (12) sont agencés au moyen d'un dispositif de réglage sur la barre de pressage (4), lequel dispositif de réglage est conçu pour se déplacer dans la direction de déplacement (7).

6. Presse plieuse selon l'une quelconque des revendications 1 à 5, **caractérisée en ce que** le dispositif d'éclairage (11) est configuré pour émettre de la lumière pulsée.

7. Presse plieuse selon l'une quelconque des revendications 1 à 6, **caractérisée en ce que** le dispositif d'éclairage (11) et/ou le dispositif de capture d'image (12) comporte un filtre de polarisation, lequel est agencé dans l'axe optique respectif (18).

8. Presse plieuse selon l'une quelconque des revendications 1 à7, **caractérisée en ce que** le dispositif d'évaluation d'image informatique (13) présente un module d'analyse d'image, qui est conçu pour l'analyse du motif de l'image capturée par le capteur d'image (25) et pour déterminer un angle.

9. Presse plieuse selon la revendication 8, **caractérisée en ce que** le dispositif d'évaluation d'image informatique (13) est conçu pour commander le déplacement de la barre de pressage (4) dans la direction de déplacement (7) en fonction de l'angle déterminé.

10. Presse plieuse selon l'une quelconque des revendications 1 à 9, **caractérisée en ce que** le séparateur de faisceau (27) est réalisé sous forme de prisme optique ou d'un miroir partiellement transparent.

11. Presse plieuse selon l'une quelconque des revendications 1 à 10, **caractérisée en ce que** le séparateur de faisceau (27) comprend un filtre de polarisation.

12. Presse plieuse selon l'une quelconque des revendications 1 à 11, **caractérisée en ce que** le réflecteur (26) est agencé à une seconde extrémité (24) du châssis opposée à la première extrémité (23).

13. Presse plieuse selon l'une quelconque des revendications 1 à 12, **caractérisée en ce que** le réflecteur (26) est agencé dans ou sur la matrice de pliage (3).
